# EUROPÄISCHE PATENTSCHRIFT

(11) **EP 1 106 854 B1**
(45) Veröffentlichungstag und Bekanntmachung des Hinweises auf die Patenterteilung: **18.04.2007**
(21) Anmeldenummer: 00125177.6
(22) Anmeldetag: 18.11.2000
(51) Int. Cl.: F16D 7/04, F16H 35/10

(54) **Überlastkupplung**
Overload coupling
Accouplement de surcharge

(30) Priorität: 02.12.1999 DE 19957972
(43) Veröffentlichungstag der Anmeldung: 13.06.2001
(73) Patentinhaber: Vorwerk & Co. Interholding GmbH, 42275 Wuppertal (DE)
(72) Erfinder: Simm, Hans-Peter, 42349 Wuppertal (DE)
(74) Vertreter: Müller, Enno

(56) Entgegenhaltungen:
- EP-A- 0 793 031
- DE-A- 19 960 322
- FR-A- 2 788 090
- JP-A- 53 082 950
- US-A- 3 898 816
- US-A- 5 601 491

## Beschreibung

Die Erfindung betrifft eine Überlastkupplung nach den Merkmalen des Oberbegriffes des Anspruches 1.

Eine Überlastkupplung der in Rede stehenden Art ist aus der JP-A-53082950 bekannt. Diese Überlastkupplung weist ein dem Antriebszahnrad axial nachgeordnetes Überlastsicherungsteil auf. Sowohl das Antriebszahnrad als auch das Überlastsicherungsteil sind zentrisch von der Antriebswelle durchsetzt. Gleichmäßig über den Umfang verteilt besitzt das Überlastsicherungsteil angeformte und abgewinkelte Federarme. Diese Abwinklung der Federarme ist in der Montagestellung dem Antriebszahnrad zugewandt und wirkt mit dementsprechend aus dem Antriebszahnrad geformten Gegenabwinklungen drehmomenterhaltend zusammen. Bei diesem Lösungsvorschlag ergibt sich bei einer Drehmomentüberschreitung ein axiales Ausfedern der Federarme des Überlastsicherungsteiles.

Ausgehend hiervon stellt sich der Erfindung die Aufgabe, eine Überlastkupplung der eingangs vorausgesetzten Art anzugeben, die bei rationaler Herstellbarkeit vorteilhaft ausgebildet ist.

Diese Aufgabe ist beim Gegenstand des Anspruches 1 gelöst, wobei darauf abgestellt ist, dass das als Blechbiegeteil ausgebildete Überlastsicherungsteil mit einem Metallgegenteil, das drehfest mit dem Antriebszahnrad verbunden ist oder mit einem entsprechenden Metallbereich des Antriebszahnrades zusammenwirkt und dass das Überlastsicherungsteil zur radialen Einfederung axial abgewinkelte Federarme aufweist. Zufolge dieser Ausgestaltung ist eine Überlastkupplung der in Rede stehenden Art angegeben, welche den Einsatz unter hohen, bei Getrieben üblichen Temperaturen erlaubt und darüber hinaus dauerfest ausgebildet ist. Bevorzugt wird hierbei zudem, dass sowohl das Überlastsicherungsteil als auch das zahnradseitige Metallgegenteil radial nicht über das Zahnrad rausragen, wobei eine Bauform gegeben ist, welche die Übertragung eines maximalen Drehmomentes bei kleinstem Gesamtdurchmesser ermöglicht. Die Kraftübertragung von einem Motor auf die Abtriebswelle kann beispielsweise mittels eines Schneckentriebes erfolgen, welches auf das frei auf der Abtriebswelle drehbar gelagerte Antriebszahnrad einwirkt. Letzteres kann beispielsweise als Schrägstirnrad ausgebildet sein. Dieses Antriebszahnrad schleppt das mit diesem verbundene Metallgegenteil oder mit einem entsprechenden Metallbereich das bevorzugt axial in Abtriebswellenerstreckung nachgeordnete, als Blechbiegeteil ausgebildete Überlastsicherungsteil mit. Letzteres ist bevorzugt über Verzahnungselemente fest mit der Abtriebswelle verbunden. Im Hinblick auf das radiale Einfedern des Überlastsicherungsteiles mit dem Metallgegenteil ist eine dauerfeste kostengünstige und gleichwohl akustisch ein Signal abgebende Ausführung ermöglicht, bei welcher in montagegünstiger Weise keine axiale Fixierung erforderlich ist. Zudem ist hier der Wechselschwingproblematik des Überlastsicherungsteiles in vorteilhafter Weise entgegengewirkt. Auch ein nicht gewünschtes durch Stöße oder dgl. verursachtes axiales Anheben der Federarme des Überlastsicherungsteiles ist durch die erfindungsgemäße Ausgestaltung entgegengewirkt.

In einer bevorzugten Ausgestaltung des Erfindungsgegenstandes ist vorgesehen, dass das Antriebszahnrad ein Kunststoffteil ist und das gesonderte Metallgegenteil als Blechbiegeteil ausgebildet ist. Zufolge dessen ist zum einen eine dauerfeste Lösung einer Überlastkupplung gefunden, welche darüber hinaus kostengünstig herstellbar ist. Zudem ist die erfindungsgemäße Überlastkupplung auch bei höheren Drehzahlen und Temperaturen funktionssicher einsetzbar. Durch die Ausbildung der Sicherungsteile als Metallteile, insbesondere Blechbiegeteile, wird bei einem Überschreiten des maximalen Drehmomentes und damit einhergehender Auslösung der Kupplung gleichzeitig das bereits eingangs erwähnte akustische Warnsignal gegeben. Insbesondere durch die Ausbildung als Stanz-Blechbiegeteile ist in axialer Richtung eine geringe Bauhöhe realisiert. Die Drehmitnahme des dem Antriebszahnrades zugeordnete Metallgegenteiles erfolgt in bevorzugter Form derart, dass das Metallgegenteil mittels Drehsicherungszapfen mit dem Antriebszahnrad drehfest verbunden ist. Bei einer Ausbildung des Antriebszahnrades als Kunststoffteil sind bevorzugt auch die Drehsicherungszapfen aus Kunststoff gefertigt und in entsprechende Aufnahmen des Antriebszahnrades eingeklebt. Das Metallgegenteil verfügt über deckungsgleiche Mitnahmebohrungen zum Eintritt der Drehsicherungszapfen. Erfindungsgemäß ist vorgesehen, dass die zur radialen Einfederung axial abgewinkelten Federarme im Wurzelbereich zur Nabe in axialer Richtung abgewinkelt sind, wobei bevorzugt die Federarme hinsichtlich ihrer Flächenerstreckung senkrecht zum Nabenbereich verlaufen. Weiter bevorzugt sind die Federarme in einem Grundriss des Überlastsicherungsteiles wirbelartig angeordnet, mit einem durch den Nabenbereich gebildeten Wirbelzentrum, wobei weiter die gedachte Wirbelrichtung in Mitnahmedrehrichtung verläuft. Konkret ist die Ausgestaltung so gewählt, dass ein Federarm in seiner Erstreckungsrichtung mit einer, durch den Wurzelbereich gehenden Tangentialen einer den Wurzelbereich berührenden oder schneidenden Kreislinie einen spitzen Winkel einschließt. Weiter ist vorgesehen, dass der Federarm eine erste Abwinklung auf die Tangentiale hin aufweist, wobei bevorzugt diese erste Abwinklung nahe der freien Endbereiches des Federarmes ausgebildet ist. Des Weiteren ist die Ausbildung so gewählt, dass diese erste Abwinklung die mit dem Federarm einen spitzen Winkel einschließende Tangente schneidet. Hinsichtlich der Übertragung auf das Metallgegenteil erweist es sich als vorteilhaft, dass das Federende, gleichfalls in zweiter Abwinklung, zur Ausbildung einer Übertragungsflanke eine von der Tangentialen wegweisenden Abwinklung aufweist. Letztere kann in einem Grundriss auch parallel zur Tangentialen, darüber hinaus auch auf der Tangentialen ausgerichtet sein. Schließlich erweist es sich als vorteilhaft, dass das Metallgegenteil topfartig ausgebildet ist, wobei an der Topfwand nach innen sich erstreckende, ausgebogene Mitnahmeflanken ausgebildet sind, welche Mitnahmeflanken mit den Federarmenden des Überlastsicherungsteils zusammenwirken.

Nachstehend ist die Erfindung anhand der beigefügten Zeichnung, welche lediglich ein Ausführungsbeispiel darstellt, näher erläutert. Es zeigt:
- Fig. 1: ein partiell geschnittenes Getriebegehäuse mit integrierter axial wirkender Überlastkupplung;
- Fig. 2: eine perspektivische Explosionsdarstellung gemäß Fig. 1 der im Wesentlichen aus einem Überlastsicherungsteil, einem Metallgegenteil und einem Antriebszahnrad bestehenden Überlastkupplung;
- Fig. 3: eine der Fig. 1 entsprechende Schnittdarstellung mit der erfindungsgemäßen radial wirkende Überlastkupplung;
- Fig. 4: den Schnitt gemäß der Linie IV-IV in Fig. 3;
- Fig. 5: eine perspektivische Explosionsdarstellung der Überlastkupplungsteile gemäß Fig. 3;
- Fig. 6: die Draufsicht auf das radial wirkende Überlastsicherungsteil;
- Fig. 7: den Schnitt gemäß der Linie VII-VII in Fig. 6;
- Fig. 8: die Seitenansicht des Überlastsicherungsteils;
- Fig. 9: die Draufsicht auf das des erfindungsgemäße Metallgegenteil;
- Fig. 10: den Schnitt gemäß der Linie X-X in Fig. 9; und
- Fig. 11: die Seitenansicht des Metallgegenteiles.

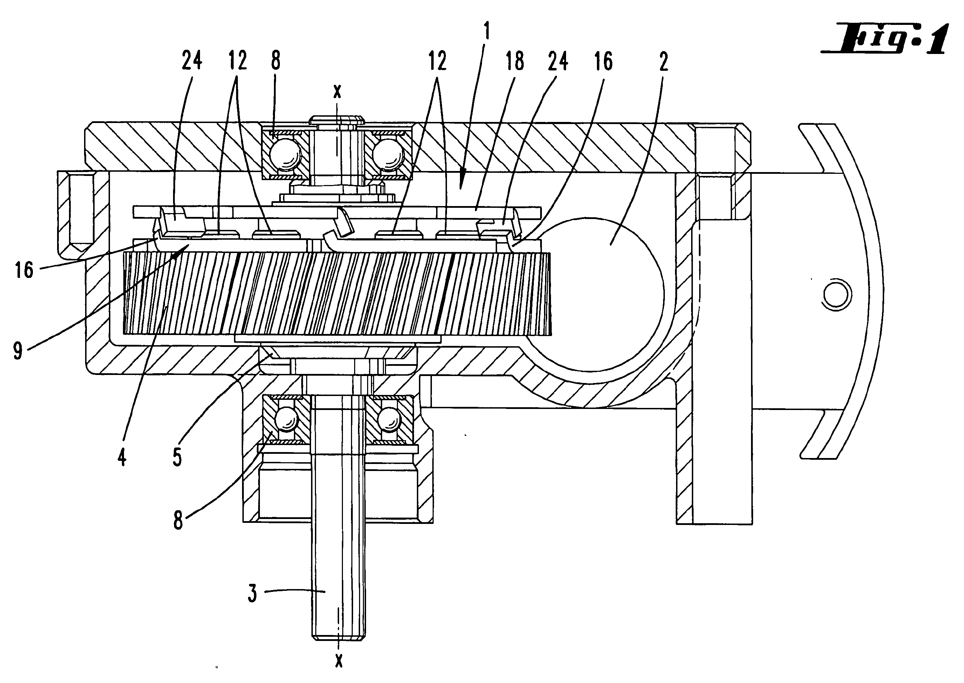

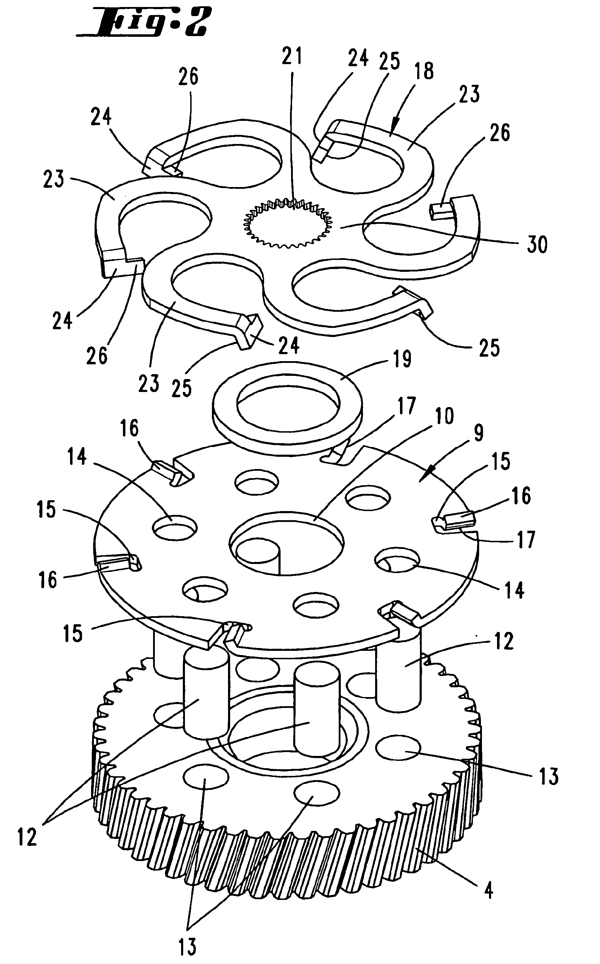

Dargestellt und beschrieben ist zunächst mit Bezug zu den Fig. 1 und 2 ein lediglich zur Illustration dargestelltes Getriebe mit einer darin angeordneten axial wirkenden Überlastkupplung 1 zwischen einer Antriebswelle 2 - hier ein nicht näher veranschaulichter Schneckenantrieb - und einer Abtriebswelle 3.

Die Antriebswelle 2 wirkt auf ein, auf der Abtriebswelle 3 frei drehbar gelagertes, ein Schrägstirnrad ausbildendes Antriebszahnrad 4 ein. Letzteres ist aus Kunststoff gebildet und stützt sich auf einem Ringkragen 5 einer über die Abtriebswelle 3 geschobenen und mit einer drehfest verbundenen Lagerhülse 6 ab, dies unter Zwischenschaltung eines Lagerringes 7. Die Abtriebswelle 3 ist über zwei Kugellager 8 in dem Getriebegehäuse gelagert, wobei zwischen den beiden Kugellagern 8 die Überlastkupplung 1 angeordnet ist. So ist zunächst ein, dem Antriebszahnrad 4 zugeordnetes Metallgegenteil 9 vorgesehen, welches gleich dem Antriebszahnrad 4 frei auf der Abtriebswelle 3 bzw. der Lagerhülse 6 drehbar gelagert ist.

Dieses Metallgegenteil 9 ist als Stanz-Blechbiegeteil ausgebildet und weist zentral eine Bohrung 10 auf, durch welche ein durchmesserverringerter Fortsatz 11 der Lagerhülse 6 tritt.

Die Anordnung ist weiter so gewählt, dass das Metallgegenteil 9 auf der diesem zugewandten Oberfläche des Antriebszahnrades 4 aufliegt, wobei eine drehfeste Verbindung zu diesem mittels Drehsicherungszapfen 12, welche gleichfalls vorzugsweise aus Kunststoff bestehen, gegeben ist. Konkret sind hierzu sechs gleichmäßig auf einer konzentrischen Kreislinie verteilt angeordnete Drehsicherungszapfen 12 vorgesehen, welche in Aufnahmebohrungen 13 des Antriebszahnrades 4 einsitzen - bevorzugt eingeklebt sind - und über die, dem Metallgegenteil 9 zugewandte Oberfläche des Antriebszahnrades 4 vorragend in entsprechend angeordneten Mitnahmebohrungen 14 desselben treten.

Der Durchmesser des Metallgegenteiles 9 ist geringfügig kleiner gewählt als der Außendurchmesser des Antriebszahnrades 4.

Im Bereich der äußeren Randzone besitzt das Metallgegenteil 9 sechs gleichmäßig über den Umfang verteilte freigestanzte, randoffene Ausschnitte 15, in deren Bereichen nach oben, d. h. von der dem Antriebszahnrad 4 abgewandten Oberfläche des Metallgegenteiles 9 ausgebogene Mitnahmeflanken 16 ausgeformt sind. Deren Mitnahmeflächen 17 sind nahezu radial ausgerichtet.

Zur Bildung der Überlastkupplung 1 ist dem Metallgegenteil 9 axial nachgeordnet ein Überlastsicherungsteil 18 zugeordnet, welches gleichfalls als Stanz-Blechbiegeteil ausgebildet ist.

Dieses Überlastsicherungsteil 18 erstreckt sich in einer parallelen Ebene zur Metallgegenteil-Ebene, dies unter Zwischenschaltung eines Distanzringes 19.

Im Gegensatz zum Metallgegenteil 9 ist dieses Überlastsicherungsteil 18 drehfest mit der Antriebswelle 2 verbunden, wozu ein fest mit der Abtriebswelle 3 verbundenes Verzahnungselement 20 in eine entsprechend profilierte Zentralbohrung 21 des Überlastsicherungsteiles 18 zur Drehmitnahme eingreift.

Zur axialen Fixierung der sich einerseits auf dem Ringkragen 5 der Lagerhülse 6 abstützenden Kupplungsteile ist auf der, dem Metallgegenteil 9 abgewandten Seite des Überlastsicherungsteiles 18 ein Gegenanschlag in Form eines Wellensicherungsringes 22 vorgesehen.

Das Überlastsicherungsteil 18 weist wie in Fig. 2 zu erkennen sechs, jeweils einen Winkel von 60° zueinander einschließende Federarme 23 auf. Diese im Wesentlichen radial von einem Nabenbereich 30 auskragenden Federarme 23 sind durch randoffene Ausstanzungen freigelegt. Die Federenden der Federarme 23 verfügen über axial, in Montagestellung in Richtung auf das Metallgegenteil 9 weisende, abgewinkelte Übertragungsflanken 24, deren Übertragungsflächen 25 im Wesentlichen radial zur Abtriebswellen-Achse x ausgerichtet sind.

Durch die gewählte Bauform des Überlastsicherungsteiles 18 in Form einer Sternfeder sind lange, lediglich durch den Außendurchmesser des Antriebszahnrades 4 begrenzte Federarme 23 ermöglicht, wodurch das System gegenüber Toleranzen unempfindlicher ist.

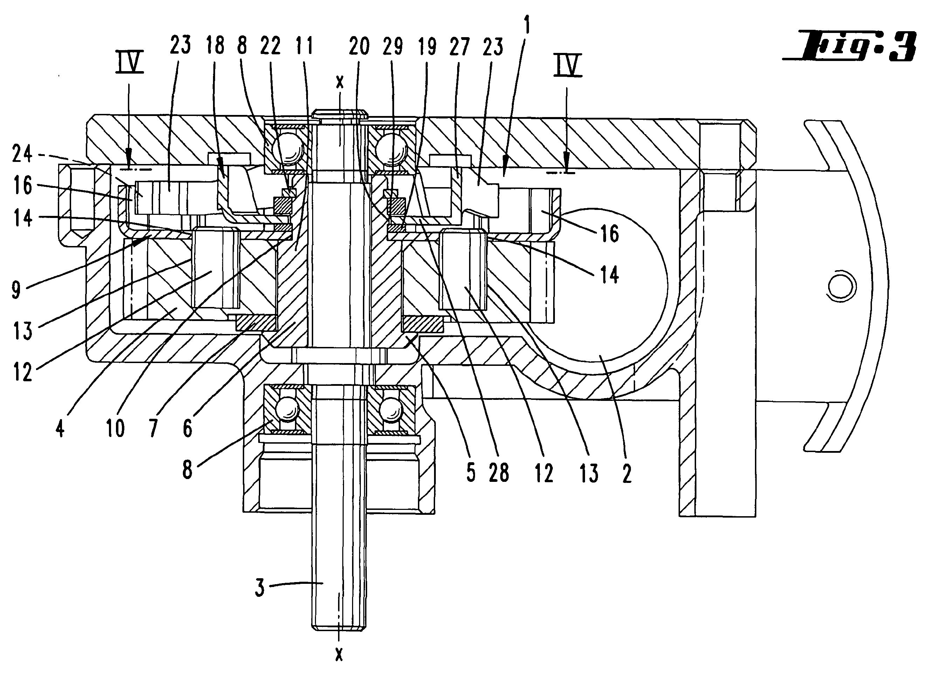

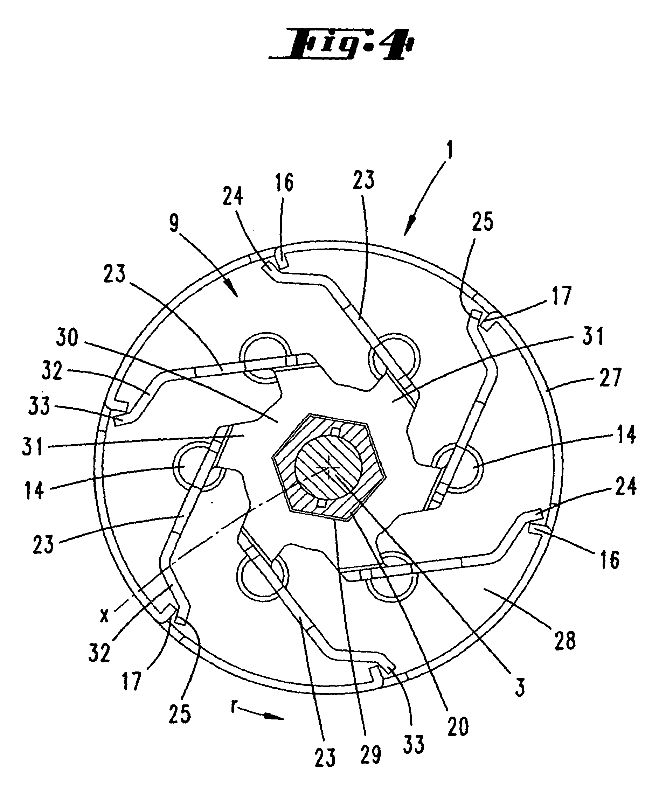

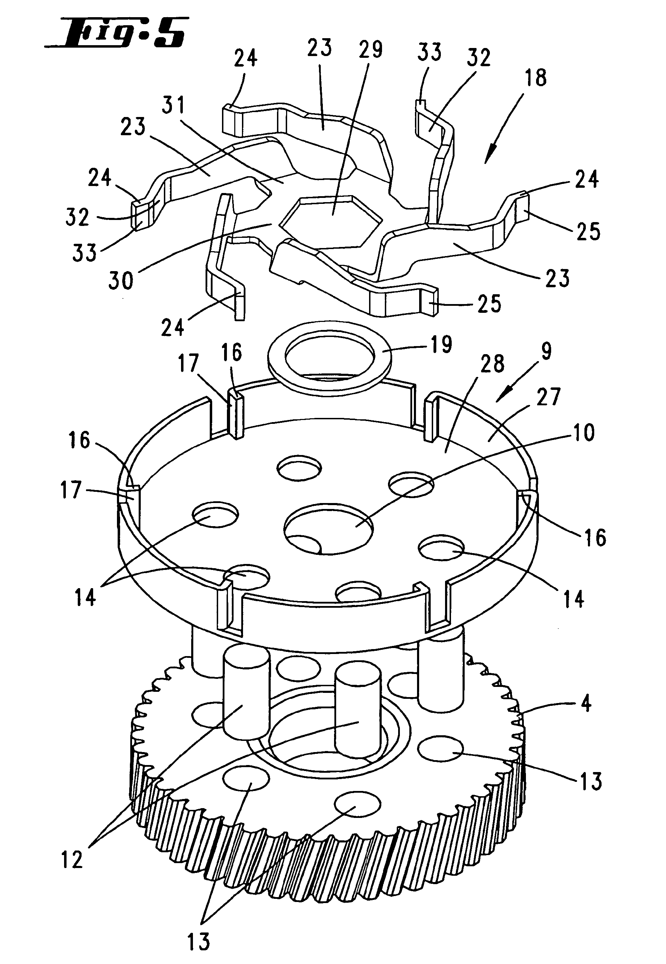

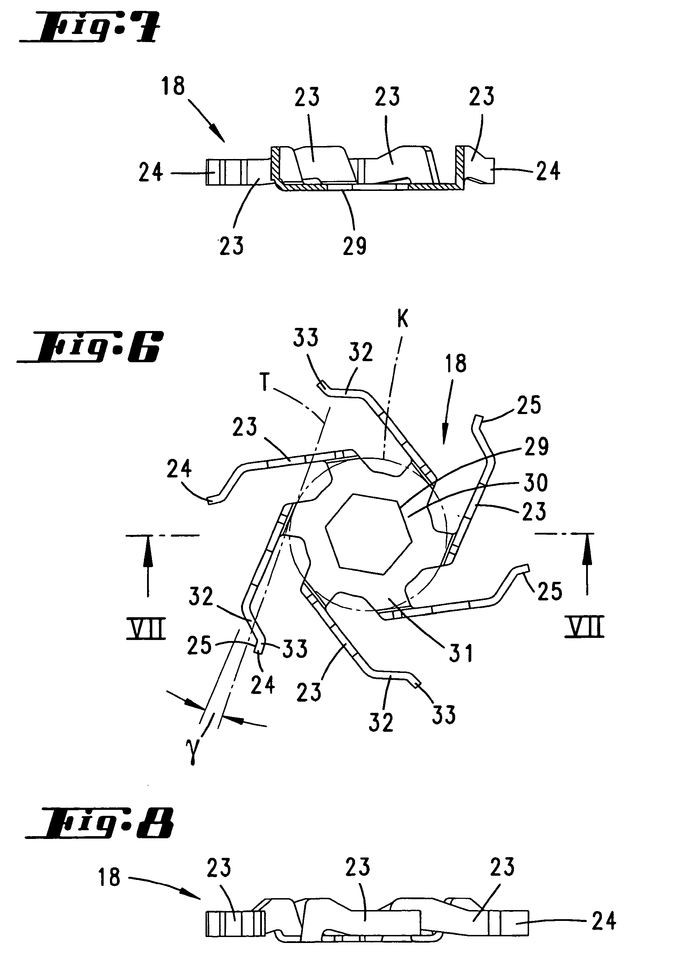

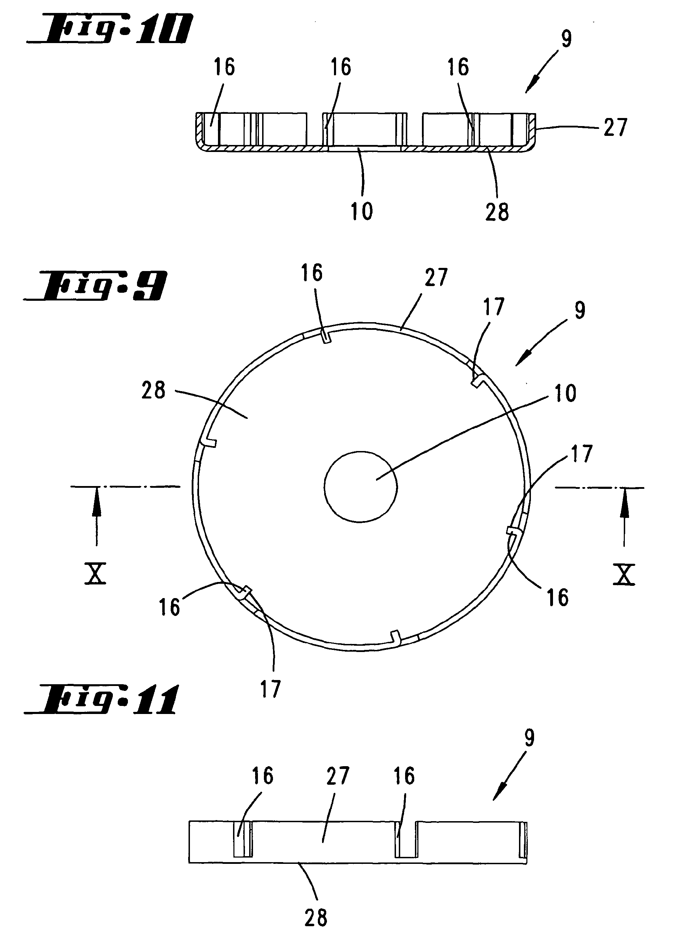

Eine Ausgestaltung nach Anspruch 1 ist in den Fig. 3 bis 11 dargestellt. Hier ist bei ähnlichem Aufbau des Getriebes erfindungsgemäß ein radial wirkende Überlastkupplung 1 realisiert.

Das Metallgegenteil 9 ist hier topfartig ausgebildet, mit einem Außendurchmesser, der etwa dem des Antriebszahnrades 4 angepasst ist. An der Topfwand 27 sind sechs, jeweils einen gleichen Winkel von 60° zueinander einschließende, sich nach innen erstreckende, ausgebogene Mitnahmeflanken 16 ausgebildet.

Des Weiteren verfügt dieses Metallgegenteil 9 im Bereich des Topfbodens 28 über Mitnahmebohrungen 14 zum Eintritt von in dem Antriebszahnrad 4 gelagerten Drehsicherungszapfen 12, zur Drehmitnahme des Metallgegenteiles 9.

Das erfindungsgemäße Überlastsicherungsteil 18 ist als Stanz-Blechbiegeteil ausgebildet und weist eine zentrale Sechskantöffnung 29 zur drehfestern Anordnung des Überlastsicherungsteiles 18 an der Abtriebswelle 3 im Bereich dessen Verzahnungselementes 20 auf.

Auch sind an dem Überlastsicherungsteil 18 durch Ausstanzungen Federarme 23 freigelegt, welche nahe des verbleibenden Nabenbereiche 30 wurzelnd axial abgewinkelt sind, dies bei einer senkrecht zum Nabenbereich 30 verlaufenden Flächenerstreckung der Federarme 23.

Wie insbesondere aus der Einzeldarstellung in Fig. 6 zu erkennen, sind sechs Federarme 23 wirbelartig zum Nabenbereich 30 angeordnet, wobei ein Federarm in seiner Erstreckungsrichtung mit einer durch den Wurzelbereich 31 gehenden Tangentialen T einer den Wurzelbereich 31 berührenden bzw. schneidenden Kreislinie K einen spitzen Winkel Gamma von ca. 5 ° einschließt. Nahe des Federendes ist eine erste, auf die Tangentiale T weisende und diese schneidende Abwinklung 32 vorgesehen, welche abschließend übergeht in eine zweite Abwinklung 33 zur Ausbildung einer Übertragungsflanke 24, welche zweite Abwinklung 33 von der Tangentialen T wegweist bzw. mit Abstand zu dieser etwa parallel verläuft.

Der durch die Abwinkelungen 32 und 33 gebildete, gebogene Verlauf der Federarme 23 weist in Montagestellung der Kupplung in Drehmitnahmerichtung r (siehe Fig. 4).

In Montagestellung gemäß Fig. 3 liegt das Überlastsicherungsteil 18 unter Zwischenlage des Distanzringes 19 in dem topfartigen Metallgegenteil 9 ein derart, dass die axiale Abwinklung der Federarme 23 nach oben, d. h. von dem Metallgegenteil 9 abgewandt weist.

Die Wirkungsweise der Überlastkupplung 1 ist wie folgt: Die Drehbewegung wird durch die Antriebswelle 2 auf das beschriebene Antriebszahnrad 4 übertragen. Durch die an dem Metallgegenteil 9 und an dem Überlastsicherungsteil 18 angeordneten Mitnahmeflanken 16 und Übertragungsflanken 24 wird die Drehbewegung in Richtung des Pfeiles r auf die Abtriebswelle 3 übergeleitet. Die axiale Fixierung der Kupplungselemente auf der Abtriebswelle 3 sorgt dafür, dass diese Elemente trotz entstehender Axialkräfte in Position bleiben. Bei der erfindungsgemäßen Ausgestaltung des Überlastsicherungsteiles 18 werden bei einem Überschreiten des maximal vorbestimmten Drehmoments die Federarme 23 radial ausgelenkt, so dass deren Übertragungsflanken 24 über die Mitnahmeflanken 16 des Metallgegenteiles 9 gleiten und damit der Kraftfluss unterbrochen ist. Hierbei erzeugt das Überspringen gleichzeitig ein akustisches Warnsignal.

## Patentansprüche

1. Überlastkupplung (1) zwischen einer Antriebswelle (2) und einer Abtriebswelle (3), wobei bezogen auf die Antriebsseite ein Antriebszahnrad (4) vorgesehen ist und ein über integrierte Federelemente verfügendes Überlastsicherungsteil (18), das axial nachgeordnet zu dem Antriebszahnrad (4) angeordnet ist und mit einem mit der Abtriebswelle (3) fest verbundenen Verzahnungselement (20) zusammenwirkt, **dadurch gekennzeichnet, dass** das als Blechbiegeteil ausgebildete Überlastsicherungssteil (18) mit einem Metallgegenteil (9), das drehfest mit dem Antriebszahnrad (4) verbunden ist oder mit einem entsprechenden Metallbereich des Antriebszahnrades (4) zusammenwirkt und dass das Überlastsicherungsteil (18) zur radialen Einfederung axial abgewinkelte Federarme (23) aufweist.

2. Überlastkupplung nach Anspruch 1, **dadurch gekennzeichnet, dass** das Antriebszahnrad (4) ein Kunststoffteil ist und das gesonderte Metallgegenteil (9) ebenfalls ein Blechbiegeteil ist.

3. Überlastkupplung nach einem der Ansprüche 1 oder 2, **dadurch gekennzeichnet, dass** das Metallgegenteil (9) mittels Drehsicherungszapfen (12) mit dem Antriebszahnrad (4) drehfest verbunden ist.

4. Überlastkupplung nach einem der Ansprüche 1 bis 3, **dadurch gekennzeichnet, dass** die Federarme (23) hinsichtlich ihrer Flächenerstreckung senkrecht zum Nabenbereich (30) verlaufen.

5. Überlastkupplung nach einem der Ansprüche 1 bis 4, **dadurch gekennzeichnet, dass** ein Federarm (23) in seiner Erstreckungsrichtung mit einer durch den Wurzelbereich (31) gehenden Tangentialen (T) einer dem Wurzelbereich (31) berührenden oder schneidenden Kreislinie (K) einen spitzen Winkel (Gamma) einschließt.

6. Überlastkupplung nach einem der Ansprüche 1 bis 5, **dadurch gekennzeichnet, dass** ein Federarm (23) eine erste Abwinklung (32) auf die Tangentiale (T) hin aufweist.

7. Überlastkupplung nach einem der Ansprüche 1 bis 6, **dadurch gekennzeichnet, dass** ein Federarmende, gegebenenfalls in zweiter Abwinklung, zur Ausbildung einer Übertragungsflanke (24) eine von der Tangentialen (T) wegweisende Abwinklung (33) aufweist.

8. Überlastkupplung nach einem der Ansprüche 1 bis 7, **dadurch gekennzeichnet, dass** das Metallgegenteil (9) topfartig ausgebildet ist, wobei an der Topfwand (27) nach innen sich erstreckende, ausgebogene Mitnahmeflanken (16) ausgebildet sind.

## Claims

1. Overload coupling (1) between a drive shaft (2) and a drive shaft (3), there being provided with respect to the drive side a drive gear wheel (4) and an overload protection part (18) which makes use of integrated spring elements, the part (18) being disposed axially downstream in drive terms with respect to the drive gear wheel (4) and cooperating with a toothed member (20) connected fixedly to the drive shaft (3), **characterized in that** the overload protection part (18) is formed as a bent sheet metal part and cooperates with a metal counter part (9) which is fixedly connected so far as rotation is concerned to the drive gear wheel (4) or to a suitable metal region of the drive gear wheel (4) and **in that** the overload protection part (18) has, for radially inward deflection, axially bent-out spring arms (23).

2. Overload coupling according to Claim 1, **characterized in that** the drive gear wheel (4) is a plastics part and the separate metal counter part (9) is likewise a bent sheet metal part.

3. Overload coupling according to one of Claims 1 or 2, **characterized in that** the metal counter part (9) is fixedly connected to the drive gear wheel (4) so far as rotation is concerned by means of rotation-assuring pins (12).

4. Overload coupling according to one of Claims 1 to 3, **characterized in that** the spring arms (23), so far as their planar extent is concerned, run at right angles to the hub region (30).

5. Overload coupling according to one of Claims 1 to 4, **characterized in that** a spring arm (23) encloses in the direction of its extent, an acute angle (gamma) with a tangent line (T) which passes through the root region (31) and is tangent to a circular line (K) which touches or cuts the root region (31).

6. Overload coupling according to one of Claims 1 to 5, **characterized in that** a spring arm (23) has a first angled portion (32) directed towards the tangent line (T).

7. Overload coupling according to one of Claims 1 to 6, **characterized in that** the end of a spring arm, optionally in a further bent portion, has an angled portion (33) directed away from the tangent line (T) in order to form a transmission face (24).

8. Overload coupling according to one of Claims 1 to 7, **characterized in that** the metal counter part (9) is cup-shaped, bent-out drive faces (16) being provided on the cup wall and extending inwardly.

## Revendications

1. Accouplement de surcharge (1) entre un arbre moteur (2) et un arbre entraîné (3), une roue dentée motrice (4) étant prévue par rapport au côté moteur et une pièce de sûreté contre la surcharge (18) disposant d'éléments à ressort intégrés, qui est agencée axialement en aval par rapport à la roue dentée motrice (4) et coopère avec un élément de denture (20) lié solidairement avec l'arbre entraîné (3), **caractérisé en ce que** la pièce de sûreté contre la surcharge (18) conçue sous forme de pièce de tôle cintrée coopère avec une pièce complémentaire en métal (9), qui est solidaire en rotation avec la roue dentée motrice (4), ou avec une zone en métal correspondante de la roue dentée motrice (4) et **en ce que** la pièce de sûreté contre la surcharge (18) présente des bras à ressort (23) coudés axialement pour permettre un débattement radial.

2. Accouplement de surcharge selon la revendication 1, **caractérisé en ce que** la roue dentée motrice (4) est une pièce en matière synthétique et la pièce complémentaire en métal (9) distincte est également une pièce de tôle cintrée.

3. Accouplement de surcharge selon l'une quelconque des revendications 1 ou 2, **caractérisé en ce que** la pièce complémentaire en métal (9) est solidaire en rotation avec la roue dentée motrice (4) au moyen de tourillons assurant la rotation (12).

4. Accouplement de surcharge selon l'une quelconque des revendications 1 à 3, **caractérisé en ce que** les bras à ressort (23) évoluent perpendiculairement à la zone de moyeu (30) pour ce qui est de leur étendue superficielle.

5. Accouplement de surcharge selon l'une quelconque des revendications 1 à 4, **caractérisé en ce qu'**un bras à ressort (23) forme un angle aigu (Gamma) dans le sens de son étendue avec une tangente (T) passant par la zone de la racine (31) d'une circonférence (K) tangente à la zone de la racine (31) ou la coupant.

6. Accouplement de surcharge selon l'une quelconque des revendications 1 à 5, **caractérisé en ce qu'**un bras à ressort (23) présente un premier coudage (32) par rapport à la tangente (T).

7. Accouplement de surcharge selon l'une quelconque des revendications 1 à 6, **caractérisé en ce qu'**une extrémité de bras à ressort présente, le cas échéant en second coudage, un coudage (33) opposé à la tangente (T) en vue de la conception d'un flanc de transmission (24).

8. Accouplement de surcharge selon l'une quelconque des revendications 1 à 7, **caractérisé en ce que** la pièce complémentaire en métal (9) est conçue à la manière d'un pot, des flancs d'entraînement (16) courbés s'étendant vers l'intérieur étant agencés sur la paroi du pot (27).
